# EUROPÄISCHE PATENTSCHRIFT

(11) **EP 4 057 487 B1**
(45) Veröffentlichungstag und Bekanntmachung des Hinweises auf die Patenterteilung: **08.10.2025**
(21) Anmeldenummer: 22154957.9
(22) Anmeldetag: 03.02.2022
(51) Int. Cl.: H02K 16/00, H02K 5/132, H02K 16/04, H02K 11/33, H02K 3/28

(54) **ELEKTRISCHER TAUCHPUMPENMOTOR UND FÖRDERVORRICHTUNG, INSBESONDERE FÜR DIE GEOTHERMIE**
SUBMERSIBLE ELECTRIC PUMP MOTOR AND CONVEYING DEVICE, IN PARTICULAR FOR GEOTHERMAL USE
MOTEUR ÉLECTRIQUE DE POMPE IMMERGÉE ET DISPOSITIF DE TRANSPORT, EN PARTICULIER POUR L'ÉNERGIE GÉOTHERMIQUE

(30) Priorität: 11.03.2021 DE 102021105936; 05.11.2021 DE 102021128866
(43) Veröffentlichungstag der Anmeldung: 14.09.2022
(73) Patentinhaber: Oil Dynamics GmbH, 69115 Heidelberg (DE)
(72) Erfinder: LIMANOWKA, Andy, Sherwood Park T8E1B9 (CA)
(74) Vertreter: Stößel, Matthias

(56) Entgegenhaltungen:
- EP-A1- 3 171 496
- CN-A- 111 049 345
- CN-Y- 2 279 740
- US-A1- 2012 223 603
- US-A1- 2012 268 049
- US-A1- 2017 074 081
- US-A1- 2019 207 493

## Beschreibung

Die Erfindung betrifft einen Elektrischer Tauchpumpenmotor, der durch einen entsprechend geringen Durchmesser zur Anordnung in einem Bohrloch einer Tiefbohrung geeignet ist, aber zur Erzeugung einer ausreichenden Förderkapazität eine entsprechend große Länge für die jeweils erforderliche Leistung aufweisen muß, in einer Bauart, die keine Stromzufuhr zum Rotor erfordert.

Die Erfindung betrifft weiterhin eine Fördervorrichtung für die Geothermie aber auch der Öl- und Wasserförderung mit Tauchpumpenmotor.

Elektrische Tauchpumpenmotoren dienen der Förderung eines Fluids durch eine Tiefbohrung aus einer Lagerstätte im Erdmantel. Dies kann beispielsweise Erdöl, Gas oder heißes Wasser sein. Letzteres dient in der Geothermie zur Energiegewinnung. Da die für diese gewünschte hohe Temperatur mit zunehmender Tiefe größer wird, kann die Tiefe der Bohrung 3000 m und mehr betragen. So herrscht beispielsweise im Oberrheingraben in 3000 m Tiefer eine Temperatur von ca. 170°C. Aus Kostengründen muß man dabei den Bohrungsdurchmesser beschränken, dieser ist in der Regel 340 mm oder weniger. Um bei einem solchen geringen Durchmesser hohe Pumpenleistungen zu erzielen, muß die Länge der Motoren teilweise 40m und mehr betragen. Um eine solche Länge bezüglich Transport und Einbau handhaben zu können, sind oft mehrere Motoren hintereinandergeschaltet. Es sind Einzellängen bis zu 12m handhabbar, die dann nach dem Einbringen in das Bohrloch durch Kupplungen verbunden werden.

Um eine hohe Leistung zu erzielen, braucht man entweder eine hohe Spannung oder hohe Stromstärken. Bei hohen Spannungen wäre eine aufwendige Isolierung erforderlich, für die der geringe Durchmesser der Bohrungen keinen Raum bietet. Bei hohen Stromstärken tritt das Problem auf, daß in den Zuleitungen Wärme produziert wird, die zu der hohen Temperatur in diesen Tiefen und der durch den Tauchpumpenmotor erzeugten Verlustwärme noch hinzukommt. Dies führt zu einer Begrenzung der Motorleistung, was wiederum die Förderkapazität der Fördervorrichtung begrenzt.

Aus der WO 2018/112399 A2 ist ein Tauchpumpensystem der eingangs genannten Art bekannt, bei dem der Tauchpumpenmotor aus vielen aneinandergekoppelten Motoren, jeweils mit Stator und Rotor, besteht. Dadurch läßt sich dieser Motor zwar in einem engen Bohrloch unterbringen, da die Motoren jedoch gemeinsam mit Strom versorgt werden, kommt es zu der vorgenannten Leistungsbegrenzung.

Aus der EP 3 306 798 B1 ist ein Linearmotor mit mehreren Statoren bekannt. Da diese zur Erzeugung einer Linearbewegung nacheinander mit Strom beaufschlagt werden müssen, kommt hier ein völlig anderes Prinzip zur Anwendung, das auch eine nicht auf dem Prinzip der Rotation basierende Pumpe voraussetzt.

Der Erfindung liegt die Aufgabe zugrunde, bei einem elektrischen Tauchpumpenmotor der eingangs genannten Art sowie bei einer Fördervorrichtung, insbesondere für die Geothermie, eine Leistungssteigerung zu erzielen.

Dies wird dadurch erreicht, daß einem Rotor mindestens zwei Statoren zugeordnet sind, welche mit separaten Stromzufuhren ausgestattet sind, wobei die Stromzufuhren von einer Stromquelle an der Erdoberfläche mit gleichem Strom und gleicher Spannung erfolgen.

Für eine Fördervorrichtung, insbesondere für die Geothermie, wird dies dadurch erreicht, daß sie mit dem vorgenannten Tauchpumpenmotor ausgestattet ist.

Die Erfindung erlaubt es, eine hohe Pumpenleistung zu erzielen, obwohl für die Zufuhr der elektrischen Energie nur der geringe Durchmesser des Bohrlochs zur Verfügung steht, der auch noch größtenteils der Aufnahme des Förderrohrs, der Tiefbrunnenpumpe, dem Ansaugstutzen und der Volumenausgleichsvorrichtung dient. Bei der Erfindung sind weder die Spannungen so hoch, daß allzuviel Raum für die Isolierungen benötigt wird, noch sind die Stromstärken so hoch, daß schwer unterzubringende Kabel mit großem Durchmesser benötigt werden. Ebenso wird die Verlustwärme in Kabel und Motor in einer ohnehin schon heißen Umgebung weitestgehend reduziert. Die gesamte Energiezufuhr wird auf mehrere Stromzufuhren für die einzelnen Statoren verteilt, die man in dem geringen Raum zwischen dem Förderrohr oder den sonstigen Bauteilen der Fördervorrichtung und der Bohrlochwandung anordnen kann.

Durch eine Begrenzung der Spannungen, Ströme und deren Abwärme, sowie eine gleichmäßigere Verteilung infolge der Anordnung mehrerer Kabel wird eine höhere Betriebssicherheit erzielt. Die Verlustwärme konzentriert sich nicht auf ein Kabel und Motor sondern wird durch gleichmäßige Verteilung erniedrigt bzw. die Leistung kann durch die Anzahl der Stromzufuhren erhöht werden. Bei Elektromotoren mit dem üblichen Verhältnis ihrer Durchmesser zu ihrer Länge und separaten Stromversorgung würde eine mechanische Zusammenkopplung zu Synchronisationsproblemen führen, wenn man nicht eine entsprechende Regelung, die dies ausgleicht, vorsieht. Bei Elektromotoren, welche im Verhältnis zu ihrer Länge einen geringen Durchmesser aufweisen, ist jedoch eine solche Regelung nicht erforderlich: Bei diesen ist der Schlupf zwischen Statorfeld und Rotor überdurchschnittlich groß, wodurch eine dynamische Synchronisation erfolgt, so daß mehrere Statoren ohne zusätzliche Synchronisationsregelung den einen Rotor treiben können. Gerade beim Einsatz in der Geothermie ist wichtig, daß keine Synchronisationsregelung benötigt wird, da Sensoren zur Erfassung der Regelungsgrößen vor Ort wegen der hohen Temperaturen in der Tiefe nicht angeordnet werden können.

Die Unteransprüche sehen vorteilhafte Weiterbildungen vor:
Es kann vorgesehen sein, daß der Rotor in seiner Längsausdehnung mehrere Abschnitte mit jeweils einer Anordnung zur Erzeugung eines Drehfeldes aufweist. Dabei kann die Längsausdehnung des Rotors aus mehreren mit Kupplungen verbundenen Teilstücken bestehen. Ein solches Teilstück kann dann einen oder mehrere der vorgenannten Abschnitte beinhalten. Auf diese Weise kann dann z.B. ein 48m langer Rotor aus 4 Teilstücken bestehen, die mit 12m noch transportier- und einbaubar sind. Auch läßt sich auf diese Weise ein Rotor nahezu beliebig verlängern, wenn dies zur Erzielung einer höheren Leistung erforderlich ist.

Ein weiterer Vorteil der separaten Stromzufuhren besteht darin, daß die einzelnen Statoren gemeinsam oder getrennt einschaltbar gemacht werden können. Auf diese Weise kann nur ein Teil der Statoren betrieben werden, wenn eine geringere Leistung gewünscht ist, oder die Fördervorrichtung kann bei Ausfall eines oder mehrerer Statoren unter Inkaufnahme einer Reduktion der Förderkapazität weiterbetrieben werden. Dasselbe gilt für Instandsetzung oder wenn aus anderen Gründen ein Stator deaktiviert werden muß.

Der Tauchpumpenmotor kann von der Erdoberfläche aus mit einer gemeinsamen Stromquelle betrieben werden oder mit mehreren synchronisierten Stromquellen.

Der Tauchpumpenmotor kann ein Permanentmagnetmotor, ein Induktionsmotor oder ein Reluktanzmotor sein. Die beiden letztgenannten sind insbesondere in der Geothermie zweckmäßig, da Permanentmagneten aus Seltenen Erden nur bedingt hitzebeständig sind.

Der erfindungsgemäße Tauchpumpenmotor ist für den Einsatz von Fördervorrichtungen vorgesehen, wobei er insbesondere für die Geothermie besonders geeignet ist, da dort möglichst hohe Temperaturen in meistens sehr tiefen Bohrungen für eine hohe Energieausbeute wünschenswert sind. Gerade diese hohen Temperaturen machen es jedoch erforderlich, jede weitere Erwärmung und insbesondere die Bildung von hot-spots, beispielsweise an Kabeln und Statoren durch die Energiezufuhr zu vermeiden.

Die Erfindung wird nachfolgend anhand der Zeichnung erläutert. Es zeigen
- **Fig. 1a**: ein Ausführungsbeispiel der Erfindung,
- **Fig. 1b**: die Schaltung der Windungen der Statoren dieses Ausführungsbeispiels,
- **Fig. 2a**: ein Beispiel des Standes der Technik,
- **Fig. 2b**: die Schaltung der Windungen der Statoren dieses Beispiels,
- **Fig. 3a**: eine Fördervorrichtung für die Geothermie mit einem erfindungsgemäßen Tauchpumpenmotor und
- **Fig. 3b**: die Anordnung von Stromzufuhren des erfindungsgemäßen Tauchpumpenmotors.

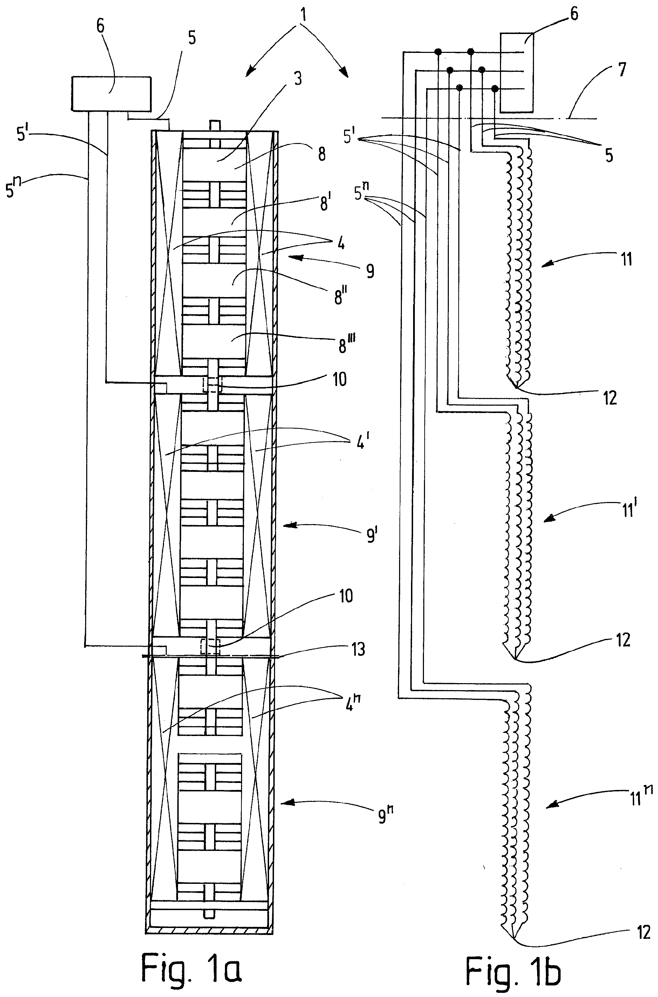

**Fig. 1a** zeigt einen möglichen Tauchpumpenmotor 1 als Beispiel für die Ausführung der Erfindung und die **Fig. 1b** die Schaltung der Windungen 11, 11', ...11ⁿ dieses Tauchpumpenmotors 1.

Der Tauchpumpenmotor 1 besteht aus einer Vielzahl von Statoren 4, 4', ... 4ⁿ, wobei die Unterbrechung 13 und die Benennung des letzten Stators mit 4ⁿ anzeigt, daß diese Anzahl entsprechend der gewünschten Förderleistung vergrößerbar ist. Alle Statoren 4, 4', ... 4ⁿ wirken mit ihren Drehfeldern auf einen Rotor 3, der aus mit Kupplungen 10 verbundenen Teilstücken 9, 9', ... 9ⁿ besteht. Der Grund dafür ist, daß ein Rotor 3 mit 40m oder mehr wegen dieser Länge nicht transportierbar bzw. einbaubar wäre. Dabei kann jedes Teilstück 9, 9', ...9ⁿ ein Rotorabschnitt 8 sein oder, wie hier gezeichnet, aus mehreren Rotorabschnitten 8, 8', 8", 8‴ bestehen, von denen jeder eine Statoranordnung zur Erzeugung eines Drehfeldes aufweist.

Die Ausgestaltung kann beliebig sein, beispielsweise als Permanentmagnetrotor, Kurzschlußläufer oder Läufer eines Reluktanzmotors. Das für die Rotation erforderliche Drehfeld wird von den Statoren 4, 4', ... 4ⁿ erzeugt, die sich entlang des Rotors 3 erstrecken und von denen jeder über eine Stromversorgung 5, 5', ... 5ⁿ verfügt, welche in Fig. 1a als Kabel dargestellt sind. Diese Kabel beinhalten dann mehrere Leiter, wie in Fig. 1b dargestellt. Dort sind sie mit den Windungen 11, 11', ... 11ⁿ der Statoren 4, 4', ... 4ⁿ verbunden, deren Enden in einer Sternschaltung 12 für Drehstrombetrieb in bekannter Weise zusammengefügt sind. Dies ist selbstverständlich nur beispielhaft, da jede Art von Motor möglich ist, soweit der Rotor 3 keiner Stromversorgung bedarf.

Wesentlich für die Erfindung ist, daß mindestens zwei Statoren 4, 4', ... 4ⁿ regelmäßig jedoch eine Vielzahl - von der Erdoberfläche 7 mit einer Stromquelle 6 oder mittels synchronisierter Stromquellen durch eine eigene Stromzufuhr 5, 5', ... 5ⁿ mit Strom versorgt wird.

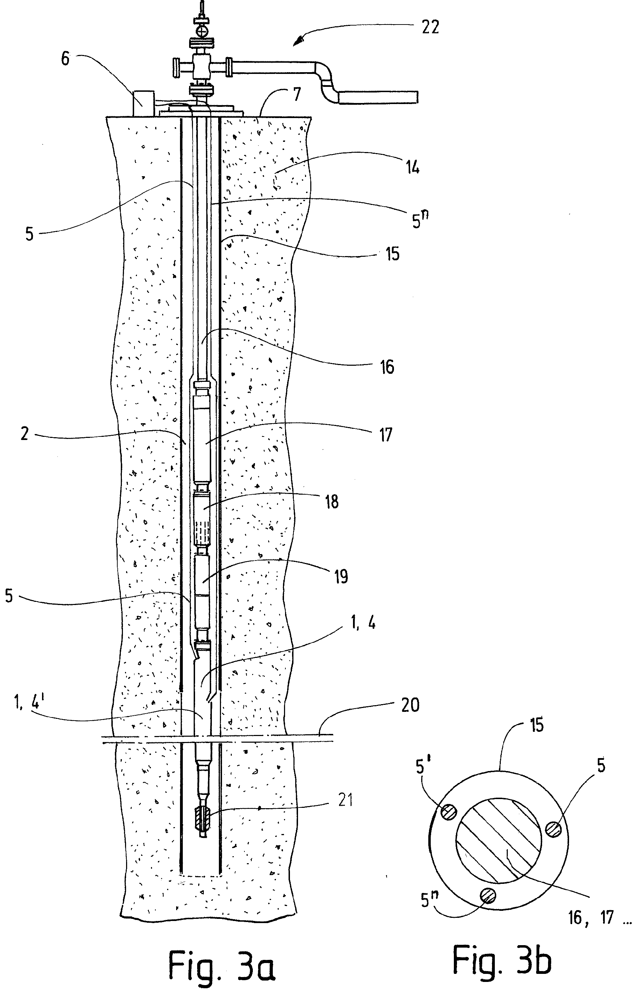

Diese Stromzufuhren 5, 5', ... 5ⁿ sind allerdings nicht so kurz, wie in Fig. 1a und 1b symbolisch dargestellt, sondern wie in der Fig. 3a eingezeichnet in einer Länge (die in dieser Darstellung auch verkürzt gezeichnet ist), die nahezu der Tiefe des Bohrlochs 2 entspricht, was die eingangs genannten Probleme des Standes der Technik verursacht.

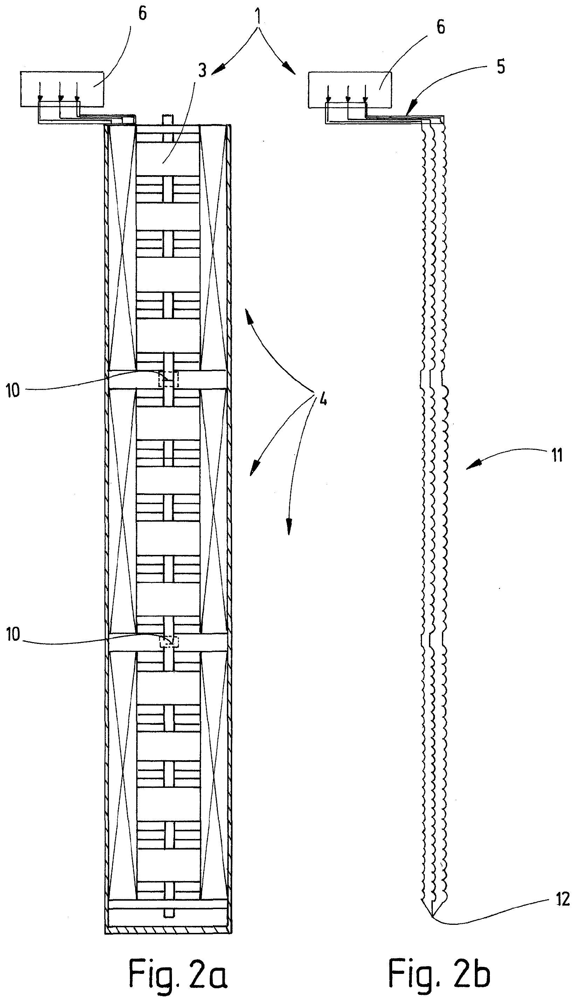

Um diese nachvollziehbar zu machen, ist in den **Fig. 2a und 2b** ein solcher Tauchpumpenmotor 1 mit Stromzufuhr 5 und Windungen 11 gemäß dem Stand der Technik gezeigt. Auch wenn er mechanisch gesehen ebenfalls einen aus Einzelstücken zusammengesetzten langen Rotor 3 hat, so weist er jedoch einen Stator 4 für den gesamten Tauchpumpenmotor 1 auf. Auch wenn dieser natürlich wegen des Transports und des Einbaus ebenfalls aus Teilstücken zusammengesetzt sein muß, handelt es sich elektrisch um einen Stator 4, wie dies die **Fig. 2b** veranschaulicht. Dabei ist ein Kabel 5, beispielsweise mit 3 Leitern für den Drehstrom, durch das gesamte Bohrloch 2 (entsprechend Fig. 3a) zu dem Tauchpumpenmotor 1 geführt, der beispielsweise bei 40 m Länge durch entsprechend lange Windungen 11 des (elektrisch gesehen) einzigen Stators 4 bis zu dem Sternpunkt 12 fließen muß, wenn dies in der Regel auch hintereinandergeschaltete kürzere Windungen 11 sind, was auch bei mehreren Motoren der Fall ist. Dies bedeutet, daß die gesamte Stromstärke entsprechend des Leitungswiderstandes konzentriert auf die eine Zuleitung 5 sowie die Länge der Windungen 11 fließt und damit Verlustwärme produziert, die sich bei der heißen Umgebung nicht optimal abführen lässt. Eine Herabsetzung des Leitungswiderstandes mittels sehr dicker Kupferkabel setzt jedoch der geringe zur Verfügung stehende Raum des Bohrlochs 2 Grenzen und ist bezüglich der Windungen 11 wegen des geringen Motordurchmessers gar nicht möglich.

**Fig. 3a** zeigt noch eine Fördervorrichtung für die Geothermie mit einem erfindungsgemäßen Tauchpumpenmotor 1.

Ausgehend von einer oberirdischen Armatur und Leitung 22 führt das - hier sehr verkürzt dargestellte - Bohrloch 2 in das Erdreich 14. In dem Bohrloch 2 ist von der Brunnenwand 15 umschlossen das Förderrohr 16 zum Transport des heißen Brunnenwassers an die Erdoberfläche 7 angeordnet. In der Tiefe befindet sich eine Tiefbrunnenpumpe 17, welche durch den Tauchpumpenmotor 1 angetrieben wird, und das durch einen Ansaugstutzen 18 angesaugte Brunnenwasser fördert. Eine Volumenausgleichsvorrichtung 19 kompensiert Volumenschwankungen des Betriebsöls der Fördervorrichtung bei Temperaturschwankungen. Von dem Tauchpumpenmotor 1 ist symbolisch nur ein kurzes Stück mit zwei Statoren 4, 4' eingezeichnet. Die Unterbrechung 20 zeigt jedoch, daß hier der Tauchpumpenmotor 1 noch eine beträchtliche Länge mit vielen Statoren 4, 4', ... 4ⁿ aufweist, jedenfalls so viele, daß die gewünschte Förderleistung erzielbar ist. Am Ende der Fördervorrichtung befindet sich schließlich eine Zentrierung 21, die die gesamte Anordnung stabilisiert.

Von einer Stromquelle 6 an der Erdoberfläche 7 ausgehend verlaufen so viele Stromzuführungen 5, 5', ... 5ⁿ durch das Bohrloch 2 als der Tauchpumpenmotor 1 Statoren 4, 4', ... 4ⁿ aufweist.

**Fig. 3b** zeigt, wie zwischen der Brunnenwand 15 und den oben aufgezählten Bauteilen der Fördervorrichtung (Förderrohr 16, Tiefbrunnenpumpe 17, Ansaugstutzen 18 und Volumenausgleichsvorrichtung 19), die zentral innerhalb der Brunnenwand 15 angeordnet sind, ein ringförmiger Raum für die Stromzufuhren 5, 5', ... 5ⁿ verbleibt. Da sich die Stromstärke im Verhältnis zu der einen einzigen Stromzufuhr 5 des Standes der Technik (Fig. 2a und 2b) auf eine Vielzahl der Stromzufuhren 5, 5', ... 5ⁿ (hier sind beispielhaft drei eingezeichnet) verteilt, erniedrigt sich hier die Stromstärke entsprechend (hier auf ein Drittel). Entsprechend verringert sich dann die Verlustwärme jeder Stromzufuhr 5, 5', ... 5ⁿ und dies kann bei mehreren Stromzufuhren 5, 5', ..., 5ⁿ auch wesentlich besser an die Umgebung abgeführt werden wie bei einer einzigen Stromzufuhr 5, die zu einem hot-spot wird.

Das dargestellte Ausführungsbeispiel kann selbstverständlich in vielerlei Hinsicht variieren, vor allem lassen sich verschiedene Arten von Elektromotoren als Tauchpumpenmotor 1 mit einem Rotor 3 und vielen Statoren 4, 4', ... 4ⁿ ausstatten, die in derselben Weise entsprechend viele Stromzufuhren 5, 5', ... 5ⁿ aufweisen.

### Bezugszeichenliste

- 1: Tauchpumpenmotor
- 2: Bohrloch
- 3: Rotor
- 4, 4', 4ⁿ: Statoren
- 5, 5', ...5ⁿ: Stromzufuhren
- 6: Stromquelle
- 7: Erdoberfläche
- 8, 8', 8", 8‴: Abschnitte des Rotors
- 9, 9' ... 9ⁿ: Teilstücke des Rotors
- 10: Kupplungen
- 11, 11', ...11ⁿ: Statorwindungen
- 12: Sternschaltung für Drehstrom
- 13: Unterbrechung zur Andeutung weiterer Statoren
- 14: Erdreich
- 15: Brunnenwand
- 16: Förderrohr
- 17: Tiefbrunnenpumpe
- 18: Ansaugstutzen
- 19: Volumenausgleichsvorrichtung
- 20: Unterbrechung zur Andeutung weiterer Statoren des Tauchpumpenmotors
- 21: Zentrierung
- 22: oberirdische Armatur und Leitung

## Patentansprüche

1. Elektrischer Tauchpumpenmotor (1), der durch einen entsprechend geringen Durchmesser zur Anordnung in einem Bohrloch (2) einer Tiefbohrung durch einen entsprechend geringen Durchmesser geeignet ist, aber zur Erzeugung einer ausreichenden Förderkapazität eine entsprechend große Länge für die jeweils erforderliche Leistung aufweisen muß, in einer Bauart, die keine Stromzufuhr zum Rotor (3) erfordert,
wobei einem Rotor (3) mindestens zwei Statoren (4, 4', ... 4ⁿ) zugeordnet sind, welche mit separaten Stromzufuhren (5, 5', ... 5ⁿ) ausgestattet sind, wobei die Stromzufuhren (5, 5', ... 5ⁿ) von einer Stromquelle (6) an der Erdoberfläche (7) mit gleichem Strom und gleicher Spannung erfolgen.

2. Elektrischer Tauchpumpenmotor nach Anspruch 1,
**dadurch gekennzeichnet,**
**daß** der Rotor (3) in seiner Längsausdehnung mehrere Abschnitte (8, 8', 8", 8‴) mit jeweils einer Statoranordnung zur Erzeugung eines Drehfeldes aufweist.

3. Elektrischer Tauchpumpenmotor nach Anspruch 2,
**dadurch gekennzeichnet,**
**daß** der Rotor (3) in seiner Längsausdehnung aus mit Kupplungen (10) verbundenen Teilstücken (9, 9', ... 9ⁿ) besteht.

4. Elektrischer Tauchpumpenmotor nach einem der Ansprüche 1 bis 3,
**dadurch gekennzeichnet,**
**daß** die Statoren (4, 4', ... 4ⁿ) durch Schalter gemeinsam oder getrennt einschaltbar sind.

5. Elektrischer Tauchpumpenmotor nach einem der Ansprüche 1 bis 4,
**dadurch gekennzeichnet,**
**daß** eine gemeinsame Stromquelle (6) vorgesehen ist.

6. Elektrischer Tauchpumpenmotor nach einem der Ansprüche 1 bis 4,
**dadurch gekennzeichnet,**
**daß** für die Statoren (4, 4', ... 4ⁿ) mehrere synchronisierte Stromversorgungsquellen vorgesehen sind.

7. Elektrischer Tauchpumpenmotor nach einem der Ansprüche 1 bis 6,
**dadurch gekennzeichnet,**
**daß** er ein Induktionsmotor ist.

8. Elektrischer Tauchpumpenmotor nach einem der Ansprüche 1 bis 6,
**dadurch gekennzeichnet,**
**daß** er ein Reluktanzmotor ist.

9. Elektrischer Tauchpumpenmotor nach einem der Ansprüche 1 bis 6,
**dadurch gekennzeichnet,**
**daß** er ein Permanentmagnetmotor ist.

10. Fördervorrichtung, insbesondere für die Geothermie,
**dadurch gekennzeichnet,**
**daß** sie mit einem Tauchpumpenmotor (1) nach einem der Ansprüche 1 bis 9 ausgestattet ist.

## Claims

1. Electric submersible pump motor (1) which, owing to a correspondingly small diameter, is suitable for arrangement in a borehole (2) of a deep well owing to a correspondingly small diameter but, in order to generate a sufficient delivery capacity, has to have a correspondingly long length for the respectively required performance, with a design that does not require power supply to the rotor (3),
wherein
a rotor (3) is assigned at least two stators (4, 4', ... 4ⁿ) which are equipped with separate power supplies (5, 5', ... 5ⁿ), wherein the power supplies (5, 5', ... 5ⁿ) are fed with the same current and the same voltage from a power source (6) on the Earth's surface (7).

2. Electric submersible pump motor according to Claim 1,
**characterized**
**in that** the rotor (3), in its longitudinal extent, has a plurality of portions (8, 8', 8", 8‴), each with a stator arrangement for generating a rotating field.

3. Electric submersible pump motor according to Claim 2,
**characterized**
**in that** the rotor (3), in its longitudinal extent, consists of pieces (9, 9', ... 9ⁿ) connected to couplings (10).

4. Electric submersible pump motor according to any of Claims 1 to 3,
**characterized**
**in that** the stators (4, 4', ... 4ⁿ) can be switched on together or separately by switches.

5. Electric submersible pump motor according to any of Claims 1 to 4,
**characterized**
**in that** a common power source (6) is provided.

6. Electric submersible pump motor according to any of Claims 1 to 4,
**characterized**
**in that** a plurality of synchronized power supply sources are provided for the stators (4, 4', ... 4ⁿ).

7. Electric submersible pump motor according to any of Claims 1 to 6,
**characterized**
**in that** it is an induction motor.

8. Electric submersible pump motor according to any of Claims 1 to 6,
**characterized**
**in that** it is a reluctance motor.

9. Electric submersible pump motor according to any of Claims 1 to 6,
**characterized**
**in that** it is a permanent-magnet motor.

10. Conveying device, in particular for geothermal applications,
**characterized**
**in that** it is equipped with a submersible pump motor (1) according to any of Claims 1 to 9.

## Revendications

1. Moteur électrique (1) pour pompe immergée, qui, grâce à un diamètre convenablement réduit, est approprié grâce à un diamètre convenablement réduit à être agencé dans un trou de forage (2) d'un forage profond, mais , pour générer une capacité de refoulement suffisante, doit présenter une longueur suffisamment grande pour la puissance chaque fois requise, dans une conception ne nécessitant pas d'alimentation en courant électrique vers le rotor (3),
dans lequel
au moins deux stators (4, 4',... 4ⁿ) sont associés à un rotor (3), lesquels sont équipés d'alimentations électriques distinctes (5, 5',... 5ⁿ), les alimentations électriques (5, 5',... 5ⁿ) étant alimentées par une source de courant (6) à la surface de la terre (7) avec le même courant et la même tension.

2. Moteur électrique pour pompe immergée selon la revendication 1,
**caractérisé**
**en ce que** le rotor (3) présente, dans son extension longitudinale, plusieurs sections (8, 8', 8'', 8‴) comprenant chacune un agencement de stator pour générer un champ tournant.

3. Moteur électrique pour pompe immergée selon la revendication 2,
**caractérisé**
**en ce que** le rotor (3) est constitué, dans son extension longitudinale, de sections (9, 9',... 9ⁿ) reliées par des accouplements (10).

4. Moteur électrique pour pompe immergée selon l'une des revendications 1 à 3,
**caractérisé**
**en ce que** les stators (4, 4',... 4ⁿ) sont aptes à être activés ensemble ou séparément par des interrupteurs.

5. Moteur électrique pour pompe immergée selon l'une des revendications 1 à 4,
**caractérisé**
**en ce qu'**une source de courant commune (6) est prévue.

6. Moteur électrique pour pompe immergée selon l'une des revendications 1 à 4,
**caractérisé**
**en ce que** plusieurs sources d'alimentation électrique synchronisées sont prévues pour les stators (4, 4',... 4ⁿ).

7. Moteur électrique pour pompe immergée selon l'une des revendications 1 à 6,
**caractérisé**
**en ce qu'**il s'agit d'un moteur à induction.

8. Moteur électrique pour pompe immergée selon l'une des revendications 1 à 6,
**caractérisé**
**en ce qu'**il s'agit d'un moteur à réluctance.

9. Moteur électrique pour pompe immergée selon l'une des revendications 1 à 6,
**caractérisé**
**en ce qu'**il s'agit d'un moteur à aimant permanent.

10. Dispositif de transport, en particulier pour la géothermie,
**caractérisé**
**en ce qu'**il est équipé d'un moteur (1) pour pompe immergée selon l'une des revendications 1 à 9.
